# EUROPÄISCHE PATENTSCHRIFT

(11) **EP 2 754 200 B1**
(45) Veröffentlichungstag und Bekanntmachung des Hinweises auf die Patenterteilung: **14.10.2015**
(21) Anmeldenummer: 12738401.4
(22) Anmeldetag: 18.07.2012
(51) Int. Cl.: H01M 10/052, H01M 10/04

(54) **VERFAHREN ZUM FERTIGEN EINER BATTERIEANORDNUNG AUS PRISMATISCHEN BATTERIEZELLEN**
METHOD FOR MANUFACTURING A BATTERY ARRANGEMENT FROM PRISMATIC BATTERY CELLS
PROCÉDÉ DE FABRICATION D'UN ENSEMBLE D'ACCUMULATEURS À PARTIR D'ÉLÉMENTS ACCUMULATEURS PRISMATIQUES

(30) Priorität: 05.09.2011 DE 102011112531
(43) Veröffentlichungstag der Anmeldung: 16.07.2014
(73) Patentinhaber: Audi AG, 85045 Ingolstadt (DE)
(72) Erfinder: HINTERBERGER, Michael, 85055 Ingolstadt (DE); AVDIC, Reuf, 85055 Ingolstadt (DE); STÖCKERT, Diana, 85055 Ingolstadt (DE); SCHMIDT, Jörg, 85057 Ingolstadt (DE)
(74) Vertreter: Herbst, Matthias Heinz
(86) Internationale Anmeldenummer: PCT/EP2012/003014
(87) Internationale Veröffentlichungsnummer: WO 2013/034204

(56) Entgegenhaltungen:
- WO-A1-2007/073279
- CN-A- 101 908 646
- DE-A1-102009 016 573
- US-A- 5 673 540

## Beschreibung

Die Erfindung betrifft ein Verfahren zum Fertigen einer Batterieanordnung aus einer Mehrzahl von prismatischen Batteriezellen durch Verpressen. Prismatische Batteriezellen sind solche, die im Querschnitt die Form eines Polygons haben. Bei dem erfindungsgemäßen Verfahren werden bevorzugt gleichartige prismatische Batteriezellen eingesetzt. Das Verfahren ist besonders dann geeignet, wenn die prismatischen Batteriezellen einen rechteckigen Querschnitt haben, insbesondere quaderförmig sind.

Zum Verpressen werden die Batteriezellen längs einer ersten Richtung nebeneinander angeordnet, und in der ersten Richtung wird ein Verpressdruck auf die Batteriezellen ausgeübt, typischerweise mit Hilfe eines Presszylinders. Durch das Verpressen haften die prismatischen Batteriezellen aneinander, und die so entstandene Batterieanordnung kann mit Kontaktierungsschienen für die Elektroden der Batteriezellen versehen werden und insgesamt zu einer Batterie weiterverarbeitet werden.

Bisher ist es so, dass die erste Richtung parallel zum Erdboden, also horizontal, verläuft. Die Batteriezellen werden beim Verpressen in einer seitlichen Führung gehalten, wie dies aus der DE 10 2010 022 519 A1 bekannt ist. Dort wird ein Pressverfahren beschrieben, bei dem allerdings die Batteriezellen in einer Zahnanordnung gehalten sind und ausgerichtet werden. Durch eine solche seitliche Führung ist jedoch noch nicht ganz gewährleistet, dass nach dem Verpressvorgang alle Batteriezellen in allen Richtungen richtig und gleichmäßig zueinander ausgerichtet sind. Unverpresst bauchen die Batteriezellen üblicherweise auf. Durch dieses Aufbauchen können sie sich dann beim Verpressen schief zueinander anordnen oder nach oben, entgegen der Schwerkraft, ausweichen.

Für die Weiterverarbeitung und die Langzeitlebensdauer der Batterie ist es jedoch wünschenswert, wenn die prismatischen Batteriezellen möglichst nicht gegenüber anderen Batteriezellen hervorstehen, sich also beim Verpressvorgang nicht dauerhaft verschieben. Die Batterieanordnung soll insbesondere zur Schaffung der fertigen Batterie auf einen Kühlkörper aufgesetzt werden können, der eine flache Oberfläche hat; entsprechend soll die Unterseite der Batterieanordnung möglichst eben sein oder zumindest eben aufsitzen. Genauso soll auch auf der Oberseite die Möglichkeit bestehen, einzelne Kontaktschienen, die die Elektroden der Batteriezellen miteinander verbinden, eben aufzusetzen, und mehrere solcher Schienen anzuordnen, damit die Kontaktierung erleichtert ist.

Es ist somit eine Aufgabe der Erfindung, bei einem Verfahren zum Fertigen einer Batterieanordnung aus einer Mehrzahl von prismatischen Batteriezellen unter Aufbringung eines Verpressdrucks dafür zu sorgen, dass die Batteriezellen in der Batterieanordnung möglichst gleichmäßig angeordnet sind.

Diese Aufgabe wird durch ein Verfahren mit den Merkmalen gemäß Patentanspruch 1 gelöst.

Erfindungsgemäß wird nach den Schritten, dass die Batteriezellen längs einer ersten Richtung nebeneinander angeordnet werden (a)), und dass in der ersten Richtung ein Verpressdruck auf die Batteriezellen ausgeübt wird (b)), in Schritt c) bei anhaltendem Verpressdruck überprüft, ob (mindestens) eine der prismatischen Batteriezellen in einer zweiten Richtung (die von der ersten Richtung verschieden ist) gegenüber den anderen Batteriezellen hervorsteht, und wenn dies der Fall ist, wird in Schritt d) der Verpressdruck aufgehoben, sodass sich die Batteriezellen entspannen können, und gemäß e) werden die Schritte b) und c) mit gegebenenfalls d) wiederholt, bis keine Batteriezelle in der zweiten Richtung hervorsteht.

Die Erfindung beruht auf der Erkenntnis, dass sich die Batteriezellen bei Nachlassen des Verpressdrucks durch das dadurch gegebene Entspannen selbsttätig wieder so positionieren, dass beim nachfolgenden Verpressen, also beim erneuten Aufbringen des Verpressdrucks das Hervorstehen der besagten Batteriezelle nicht mehr besteht oder nicht mehr so ausgeprägt ist.

Dies gilt insbesondere dann, wenn die zweite Richtung senkrecht zur ersten Richtung verläuft, und in ganz besonderem Maße ist dies gültig, wenn die prismatischen Batteriezellen auf einer Unterlage angeordnet werden, und wenn die zweite Richtung eine Komponente aufweist, die entgegen der Schwerkraft verläuft. Insbesondere bei nach oben hervorstehenden Batteriezellen können diese nämlich unter Wirkung der Schwerkraft bei Aufheben des Verpressdrucks wieder zurück in die Wunschposition auf die Unterlage fallen bzw. rutschen, gegebenenfalls hierbei die anderen Batteriezellen etwas in die erste Richtung wegdrücken.

Das Überprüfen in Schritt c) erfolgt hierzu bevorzugt durch an jeweils anderen Batteriezellen wiederholte Abstandsmessung zwischen einer Laserquelle und einer Batteriezelle mittels eines von der Laserquelle ausgesandten Laserstrahls. Eine solche Abstandsmessung ist von im Handel erhältlichen Geräten, wie sie z. B. zur Vermessung von Räumen eingesetzt werden, bekannt.

Die Laserquelle kann beispielsweise bei Positionierung der prismatischen Batteriezellen auf einer Unterlage auf einer Schiene parallel zu dieser Unterlage verfahren werden, sodass bei bekannter Höhe der prismatischen Batteriezellen der Abstand zwischen der Laserquelle und der Oberseite der prismatischen Batteriezelle bekannt ist, der bei ordnungsgemäßer Lage der Batteriezellen vorliegt; und wird ein kürzerer Abstand gemessen, so bedeutet dies, dass die eine Batteriezelle nach oben hervorsteht.

Bei einer bevorzugten Ausführungsform des erfindungsgemäßen Verfahrens wird bei anhaltendem Verpressdruck auch überprüft, ob eine der prismatischen Batteriezellen in einer dritten Richtung gegenüber den anderen Batteriezellen hervorsteht (wobei die dritte Richtung bevorzugt von der zweiten Richtung und bevorzugt auch von der ersten Richtung verschieden ist), und wenn dies der Fall ist, wird der Verpressdruck ebenfalls aufgehoben und ein Hilfskörper mit zumindest partieller Wirkrichtung in die dritte Richtung auf die Batteriezelle gedrückt.

Der Hilfskörper ist insbesondere dann einsetzbar, wenn wegen der Wahl der dritten Richtung das Sich-Entspannen der Batteriezellen nur in eingeschränktem Maße zur selbsttätigen Repositionierung der Batteriezellen in die Ideallage führt; z. B., wenn keine Reproduzierbarkeit gegeben ist, weil die Unterlage eine variable Reibung aufweist.

Bei einer bevorzugten Ausführungsform dieser Erfindung umfasst der Hilfskörper eine Klappe. Eine solche Klappe kann mechanisch einfach unter Wirkung eines Zylinders oder einer Feder gegen die prismatischen Batteriezellen geklappt werden, insbesondere von der Seite her, und wenn die Klappe eine Ebene oder gegebenenfalls geeignet gewölbte Oberfläche aufweist, werden die Batteriezellen wie gewünscht repositioniert.

Bevorzugt verläuft die dritte Richtung senkrecht zur zweiten Richtung, insbesondere dann, wenn die zweite Richtung senkrecht zur ersten Richtung verläuft, dann sind durch die drei Richtungen die Richtungen eines kartesischen Koordinatensystems bereitgestellt, das besonders geeignet für eine Überprüfung ist.

Bevorzugt erfolgt das Überprüfen bezüglich der dritten Richtung mit Hilfe einer Kamera. Wenn mit Hilfe der Laserquelle eine Abstandsmessung erfolgt, kann die Kamera unmittelbar neben der Laserquelle angeordnet werden und eine Abweichung von der Solllage der Batteriezellen erfassen. Die Kamera kann gegebenenfalls auch eine Kennung auf den Batteriezellen aufnehmen, und eine nachfolgende Bildverarbeitungseinrichtung kann die Batteriezellen sodann identifizieren. Auf diese Weise steht genau fest, welche Batteriezelle wann in die dritte Richtung hervorstand. Wird die Kamera zusammen mit der Laserquelle gleichzeitig zur Abstandsmessung und zum Erfassen der Abweichung in die dritte Richtung eingesetzt, kann auch ein Abweichen in die zweite Richtung der Kennung zugeordnet werden.

Die Erfindung ist besonders dann geeignet, wenn als Batteriezellen Lithium-Ionen-Batteriezellen verwendet werden, um die Batterieanordnung zu bilden. Bei solchen Lithium-Ionenzellen tritt die genannte Folge des sich Aufbauchens der unverpressten Lithium-Ionenzellen beim Verpressen in besonderem Maße auf, und damit auch der Effekt, dass die Batteriezelle, die gegen die Schwerkraft nach oben verschoben ist, wieder nach unten zurückgleiten kann, wenn sie sich entspannt.

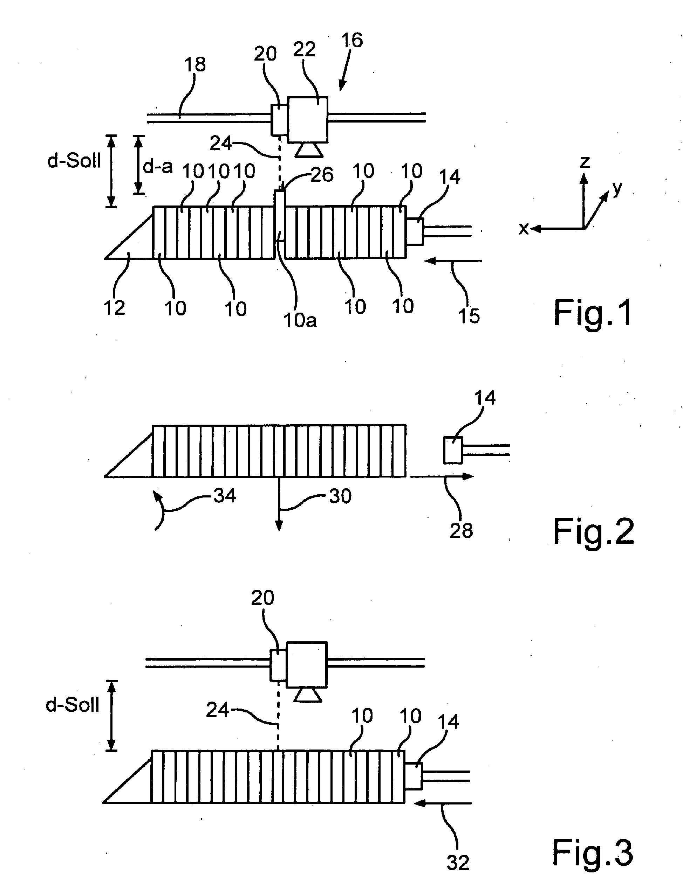

Nachfolgend wird eine bevorzugte Ausführungsform der Erfindung unter Bezug auf die Zeichnungen näher beschrieben, in der
- Fig. 1 bis Fig. 3: unterschiedliche Stadien des Verfahrens zum Fertigen einer Batterieanordnung aus einer Mehrzahl von quaderförmigen Lithium-Ionen-Batteriezellen veranschaulichen, wobei die Anordnung von der Seite her gezeigt ist.

Eine Mehrzahl von Lithium-Ionen-Batteriezellen 10 soll durch Verpressen aneinander haften, sodass eine stabile Batterieanordnung für eine Batterie, die insbesondere in einem Elektromobil einsetzbar ist, geschaffen wird.

Aus diesem Grund werden die einzelnen Lithium-Ionen-Batteriezellen 10 bezogen auf eine erste Richtung x nebeneinander angeordnet, und zwar in Anlage an einen Halteklötz 12. Von der in x-Richtung dem Halteklotz 12 entgegengesetzten Seite wirkt ein Stößel 14 (ein Zylinder) auf die Lithium-Ionen-Batteriezellen 10 ein und drückt diese entsprechend dem Pfeil 15 zusammen.

Vorliegend sei eine einzelne Lithium-Ionen-Batteriezelle 10a durch das beim Verpressen bewirkte Aufbauchen nach oben gedrückt worden, in z-Richtung.

Dieses soll hier durch eine Überwachungseinrichtung 16 erkannt werden. Die Überwachungseinrichtung umfasst eine geeignet befestigte Schiene 18, auf der eine Laserquelle 20 und eine Kamera 22 verfahren werden können. Fig. 1 zeigt die Laserquelle 20 oberhalb der Lithium-Ionen-Batteriezelle 10a. Mit Hilfe eines Laserstrahls 24, den die Laserquelle 22 aussendet, lässt sich in an sich bekannter Weise der Abstand d-a zwischen der Laserquelle 20 und der Oberseite 26 der Lithium-Ionen-Batteriezelle 10a vermessen.

Dieser Abstand wird mit dem Soll-Abstand d-Soll verglichen, der bei allen anderen Lithium-Ionen-Batteriezellen 10 eingehalten ist.

Vorliegend sei der Abstand d-a um einen solchen Betrag kleiner als d-Soll dass eine korrigierende Maßnahme eingeleitet werden muss.

Aus diesem Grund wird, wie in Fig. 2 veranschaulicht, der Stößel 14 entsprechend dem Pfeil 28 von den Lithium-Ionen-Batteriezellen 10 weg bewegt. Da sich die einzelnen Lithium-Ionen-Batteriezellen 10 und insbesondere die Lithium-Ionen-Batteriezelle 10a aufgebaucht haben, drücken die Lithium-Ionen-Batteriezellen 10 und 10a sich voneinander weg, und insbesondere drückt die Lithium-Ionen-Batteriezelle 10a die auf der Seite des Stößels 14 von ihr gelegenen Lithium-Ionen-Batteriezellen 10 in Richtung des Pfeils 28 weg und rutscht gemäß dem Pfeil 30 nach unten.

Danach wird der Stößel 14 gemäß dem Pfeil 32 erneut gegen die Lithium-Ionen-Batteriezellen 10 gedrückt, und gleichzeitig wird mit Hilfe des Lasers 24 der Abstand gemessen, der vorliegend nunmehr genau d-Soll ist, was das Ziel des Vorgehens war.

Bei Abweichung der Soll-Lage der Lithium-Ionen-Batteriezellen 10 in der y-Richtung kann dies durch die Draufsicht vermittels der Kamera 22 erkannt werden, und gegebenenfalls kann eine in den Figuren nicht gezeigte Klappe bei aufgehobenem Verpressdruck (Fig. 2) gemäß dem Pfeil 34 umklappen und die Lithium-Ionen-Batteriezellen 10, 10a in y-Richtung gegen ein Gegenstück drücken und so geraderücken.

Nach Durchführung des Verfahrens kann die so geschaffene Batterieanordnung, die auch als "Stack" bezeichnet wird, auf einen Kühlkörper mit ebener Oberfläche aufgebracht werden, und auf der Oberseite des Stacks können Stromschienen angebracht werden.

## Patentansprüche

1. Verfahren zum Fertigen einer Batterieanordnung aus einer Mehrzahl von prismatischen Batteriezellen (10), wobei
a) die Batteriezellen (10) längs einer ersten Richtung nebeneinander angeordnet werden,
b) in der ersten Richtung ein Verpressdruck auf die Batteriezellen (10) ausgeübt wird,
c) bei anhaltendem Verpressdruck überprüft wird, ob eine (10a) der prismatischen Batteriezellen (10) in einer zweiten Richtung gegenüber den anderen Batteriezellen (10) hervorsteht, und wenn dies der Fall ist:
d) der Verpressdruck aufgehoben wird, sodass sich die Batteriezellen (10, 10a) entspannen können und
e) die Schritte b) und c) wiederholt werden, bis keine Batteriezelle (10, 10a) in der zweiten Richtung hervorsteht.

2. Verfahren nach Anspruch 1,
**dadurch gekennzeichnet, dass**
die zweite Richtung senkrecht zur ersten Richtung verläuft.

3. Verfahren nach Anspruch 1 oder Anspruch 2,
**dadurch gekennzeichnet, dass**
die prismatischen Batteriezellen (10, 10a) auf einer Unterlage angeordnet werden und die zweite Richtung eine Komponente aufweist, die entgegen der Schwerkraft verläuft.

4. Verfahren nach einem der vorhergehenden Ansprüche,
**dadurch gekennzeichnet, dass**
in Schritt c) das Überprüfen durch an jeweils anderen Batteriezellen (10, 10a) wiederholte Abstandsmessung zwischen einer Laserquelle (20) und einer Batteriezelle (10a) mittels eines von der Laserquelle (20) ausgesandten Laserstrahls (24) erfolgt.

5. Verfahren nach einem der vorhergehenden Ansprüche,
**dadurch gekennzeichnet, dass**
bei anhaltendem Verpressdruck auch überprüft wird, ob eine der prismatischen Batteriezellen in einer dritten Richtung gegenüber den anderen Batteriezellen hervorsteht, und wenn dies der Fall ist, der Verpressdruck aufgehoben wird und ein Hilfskörper mit zumindest partieller Wirkrichtung (34) in die dritte Richtung auf die Batteriezellen (10) gedrückt wird.

6. Verfahren nach Anspruch 5,
**dadurch gekennzeichnet, dass**
der Hilfskörper eine Klappe umfasst.

7. Verfahren nach Anspruch 5 oder Anspruch 6,
**dadurch gekennzeichnet, dass**
die dritte Richtung senkrecht zur zweiten Richtung verläuft.

8. Verfahren nach einem der Ansprüche 5 bis 7,
**dadurch gekennzeichnet, dass**
das Überprüfen bezüglich des Hervorstehens in der dritten Richtung mit Hilfe einer Kamera (22) erfolgt.

9. Verfahren nach einem der vorhergehenden Ansprüche,
**dadurch gekennzeichnet, dass**
als Batteriezellen (10, 10a) Lithium-Ionen-Batteriezellen verwendet werden.

## Claims

1. Method for manufacturing a battery arrangement from a plurality of prismatic battery cells (10), wherein
a) the battery cells (10) are arranged side by side in one direction,
b) a compressive force is exerted on the battery cells (10) in the first direction,
c) while the compressive force is maintained, a check is carried out as to whether one (10a) of the prismatic battery cells (10) is protruding relative to the other battery cells (10) in a second direction, and if this is the case:
d) the compressive force is removed so that the battery cells (10, 10a) can relax and
e) steps b) and c) are repeated until no battery cells (10, 10a) are protruding in the second direction.

2. Method according to claim 1, **characterised in that** the second direction extends perpendicularly to the first direction.

3. Method according to claim 1 or claim 2, **characterised in that** the prismatic battery cells (10, 10a) are arranged on a substrate and the second direction comprises a component which runs counter to gravity.

4. Method according to one of the preceding claims, **characterised in that**, in step c), the check is carried out by repeated measurement, carried out on other battery cells (10, 10a), of the distance between a laser source (20) and a battery cell (10a), using a laser beam (24) emitted from the laser source (20).

5. Method according to one of the preceding claims, **characterised in that** while the compressive force is maintained a check is also carried out as to whether one of the prismatic battery cells is protruding relative to the other battery cells in a third direction, and if this is the case the compressive force is removed and an auxiliary body with an at least partial direction of effect (34) is pressed onto the battery cells (10) in the third direction.

6. Method according to claim 5, **characterised in that** the auxiliary body comprises a flap.

7. Method according to claim 5 or claim 6, **characterised in that** the third direction extends perpendicularly to the second direction.

8. Method according to one of claims 5 to 7, **characterised in that** the check for protrusion in the third direction is carried out using a camera (22).

9. Method according to one of the preceding claims, **characterised in that** lithium ion battery cells are used as battery cells (10, 10a).

## Revendications

1. Procédé de fabrication d'un agencement de batterie à partir d'une multiplicité de cellules de batterie prismatiques (10), selon lequel
a) on agence les cellules de batterie (10) les unes à côté des autres le long d'une première direction,
b) on exerce une force de compression sur les cellules de batterie (10) dans la première direction,
c) la force de compression étant maintenue, on vérifie si l'une (10a) des cellules de batterie prismatiques (10) dépasse par rapport aux autres cellules de batterie (10) dans une deuxième direction et, si c'est le cas :
d) on supprime la force de compression de telle sorte que les cellules de batterie (10, 10a) peuvent se détendre et
e) on répète les étapes b) et c) jusqu'à ce qu'aucune cellule de batterie (10, 10a) ne dépasse dans la deuxième direction.

2. Procédé selon la revendication 1, **caractérisé en ce que** la deuxième direction est perpendiculaire à la première direction.

3. Procédé selon la revendication 1 ou selon la revendication 2, **caractérisé en ce que** les cellules de batterie prismatiques (10, 10a) sont agencées sur un support et **en ce que** la deuxième direction a une composante qui s'étend contre la force de gravité.

4. Procédé selon l'une des revendications précédentes, **caractérisé en ce que**, à l'étape c), la vérification s'effectue par le biais d'une mesure de distance, répétée sur les autres cellules de batterie (10, 10a) respectives, entre une source laser (20) et une cellule de batterie (10a) au moyen d'un rayon laser (24) émis par la source laser (20).

5. Procédé selon l'une des revendications précédentes, **caractérisé en ce que**, la force de compression étant maintenue, on vérifie aussi si l'une des cellules de batterie prismatiques dépasse par rapport aux autres cellules de batterie dans une troisième direction et, si c'est le cas, on supprime la force de compression et on pousse un corps auxiliaire avec au moins une direction effective partielle (34) dans la troisième direction sur les cellules de batterie (10).

6. Procédé selon la revendication 5, **caractérisé en ce que** le corps auxiliaire comprend un volet.

7. Procédé selon la revendication 5 ou selon la revendication 6, **caractérisé en ce que** la troisième direction est perpendiculaire à la deuxième direction.

8. Procédé selon l'une des revendications 5 à 7, **caractérisé en ce que** la vérification concernant le dépassement dans la troisième direction s'effectue à l'aide d'une caméra (22).

9. Procédé selon l'une des revendications précédentes, **caractérisé en ce que** l'on utilise comme cellules de batterie (10, 10a) des cellules de batterie lithium-ion.
